(19) **Europäisches Patentamt**

**European Patent Office**

**Office européen des brevets**

(11) Veröffentlichungsnummer: **0 676 416 A2**

(12) **EUROPÄISCHE PATENTANMELDUNG**

(21) Anmeldenummer: **95105174.7**

(22) Anmeldetag: **06.04.95**

(51) Int. Cl.⁶: **C08B 11/20**, C08B 11/22

(30) Priorität: **11.04.94 DE 4412391**

(43) Veröffentlichungstag der Anmeldung:
**11.10.95 Patentblatt 95/41**

(84) Benannte Vertragsstaaten:
**BE DE GB SE**

(71) Anmelder: **HOECHST AKTIENGESELLSCHAFT**

**D-65926 Frankfurt am Main (DE)**

(72) Erfinder: **Sponheimer, Manfred**
**Bodelschwingh-Strasse 48**
**D-65191 Wiesbaden (DE)**
Erfinder: **Welt, Günther, Dr.**
**Bahnhofstrasse 36**
**D-55296 Gau-Bischofsheim (DE)**
Erfinder: **Ziegelmayer, Manfred**
**Treburer Strasse 31**
**D-65474 Bischofsheim (DE)**

(54) **Verfahren zum Sieben von Celluloseethern.**

(57) Verfahren zum Absieben von Celluloseethern, die eine feinfaserige, beziehungsweise wattige, beziehungsweise wollige Struktur aufweisen, umfassend die Maßnahmen:
a) Aufbringen des Celluloseethers (Siebgut) auf eine Siebfläche,
b) Auftrennen des Siebgutes in Durchlaufmenge (Gutkorn oder Siebdurchgang) und Umlaufmenge (Überkorn oder Siebflächenüberlauf) mit Hilfe einer schwingenden und/oder taumelnden Siebfläche,
c) Austragen der Durchlaufmenge und
d) Austragen der Umlaufmenge aus dem Siebsystem,
dadurch gekennzeichnet, daß die schwingende und/oder taumelnde Siebfläche von unten her mit einem Luftstrahl senkrecht zur Siebfläche durchspült wird.

EP 0 676 416 A2

Die bei der Herstellung von Celluloseethern anfallenden Produkte liegen in der Regel nach Abtrennung von Nebenprodukten, in Abhängigkeit vom Veretherungsgrad und dem eingesetzten Zellstoff, in überwiegend bröckeliger, faseriger, wolliger oder wattiger Struktur vor.

In dieser Form sind sie für ihren weiteren Einsatz, beispielsweise als in organischen und/oder wäßrigen Medien lösliche Produkte, nicht geeignet.

Auch ist es notwendig, für die unterschiedlichen Einsatzgebiete bestimmte Korngrößenverteilungen, Trocknungsgrade und Viskositätsgrade einzustellen. So werden beispielsweise Celluloseether in fein- oder feinstteiliger Form benötigt, um schnell klumpfreie Lösungen, beispielsweise in Wasser, herstellen zu können. Für schnell quellfähige Celluloseether, die beispielsweise in der Bohröl- oder Bauindustrie benötigt werden, ist die Viskositäts- und/oder die Korngrößenverteilung der Produkte von mit ausschlaggebender Bedeutung für ihre Wirksamkeit. Üblicherweise werden die Celluloseether im Anschluß an ihre Herstellung mittels bekannter Trocknungs-, Mahl- und gegebenenfalls Siebverfahren konfektioniert, wobei insbesondere das Mahlen und Sieben von wattigen Celluloseethern große Schwierigkeiten bereitet.

Aus DE-A-24 58 998 ist bekannt, daß wattige Celluloseether nur mit bestimmten Mühlen gemahlen werden können und ein Absieben aufgrund schlechter Rieselfähigkeit des Mahlgutes fast unmöglich ist.

EP-A-0 049815 betrifft ein mehrstufiges Verfahren zur Herstellung von Mikropulvern aus Celluloseethern, durch das auf einfache Weise feine und feinste Pulver hergestellt werden können. Gemäß EP-A-0 049 815 werden Celluloseether, die eine faserige, beziehungsweise wattige, beziehungsweise wollige Struktur aufweisen zuerst in eine verfestigte Form überführt und anschließend in einer Strahlmühle gemahlen, so daß die gewünschte Kornfeinheit erreicht wird.

Nachteilig an diesem Verfahren ist der mehrstufige Aufbau um zu der gewünschten Kornfeinheit zu gelangen. Darüber hinaus ist dieses diskontinuierliche Verfahren nur im Labormaßstab für Mikropulver anwendbar.

Bei den bekannten Konfektionierverfahren wird in der Regel der Sieböberlauf dem Mahlsystem wieder zugeführt und einer erneuten Mahlung unterworfen. Die Partikel des Sieböberlaufes können daher mehrmals die Mahlanlage durchlaufen bis sie in die gewünschte Kornform überführt sind. Aufgrund schlechter Aussiebgrade auf der Siebmaschine kann oftmals ein Aufschaukeln des im Kreis geführten Produktes nicht verhindert werden, da im Sieböberlauf mit zunehmender Betriebszeit eine immer größere Menge an Gutkorn enthalten ist.

Weiterhin wird bei den aus dem Stand der Technik bekannten Verfahren das Siebgut durch das mehrmalige Durchlaufen der Mahlanlage mechanisch und thermisch stark beansprucht, so daß insbesondere bei hochviskosen, hochsubstituierten Celluloseethern die Makromoleküle im Sinne einer Kettenverkleinerung abgebaut werden, was sich insbesondere in einem mehr oder weniger hohen Viskositätsabbau gegenüber dem ursprünglich eingesetzten Celluloseether bemerkbar macht.

Durch die aus dem Stand der Technik bekannten Verfahren ergibt sich jedoch keine Möglichkeit aus wattigen, faserigen Celluloseethern Produkte mit definierter Korngrößenverteilung, Rieselfähigkeit und definiertem Schüttgewicht bei geringem Überkorn- und hohem Gutkornanteil zu gelangen.

Es bestand daher die Aufgabe ein Verfahren zum Sieben von Celluloseethern, die eine feinfaserige, beziehungsweise wattige, beziehungsweise wollige Struktur aufweisen, bereit zu stellen, bei dem

-  die Korngrößenverteilung gezielt eingestellt werden kann,
-  das Schüttgewicht des Celluloseethers erhöht werden kann,
-  der Celluloseether eine Rieselfähigkeit erlangt oder die vorhandene Rieselfähigkeit verbessert wird.

Darüber hinaus bestand die Aufgabe, die Überlaufmengen so zu reduzieren, daß ein Aufschaukeln des Siebgutes verhindert wird.

Gegenstand der Erfindung ist ein Verfahren zum Absieben von Celluloseethern, die eine feinfaserige, beziehungsweise wattige, beziehungsweise wollige Struktur aufweisen, umfassend die Maßnahmen:

a) Aufbringen des Celluloseethers (Siebgut) auf eine Siebfläche,

b) Auftrennen des Siebgutes in Durchlaufmenge (Gutkorn oder Siebdurchgang) und Umlaufmenge (Überkorn oder Siebflächenüberlauf) mit Hilfe einer schwingenden und/oder taumelnden Siebfläche,

c) Austragen der Durchlaufmenge und

d) Austragen der Umlaufmenge aus dem Siebsystem,

dadurch gekennzeichnet, daß die schwingende und/oder taumelnde Siebfläche nur von unten her mit einem Luftstrahl senkrecht zur Siebfläche, vorzugsweise in einem Winkel von 85 bis 95 °, insbesondere 90 °, zur Siebfläche durchspült wird.

Bei den im erfindungsgemäßen Verfahren eingesetzten Celluloseethern handelt es sich um Celluloseether, die eine feinfaserige, beziehungsweise wattige, beziehungsweise wollige Struktur aufweisen.

Bei dem erfindungsgemäßen Verfahren werden bevorzugt hochviskose, hochsubstituierte Celluloseether eingesetzt.

Als hochviskose Celluloseether werden solche Celluloseether bezeichnet deren Viskosität (gemessen als 1,9 gew.-%ige wäßrige Lösung) 30000 bis 300000 mPa•s beträgt.

Als hochsubstituierte Celluloseether werden solche Celluloseether bezeichnet deren molekularer Substitutionsgrad (MS-Wert) zwischen 0,05 und 0,8 und deren durchschnittlicher Substitutionsgrad (DS-Wert) zwischen 1,3 und 2,1 beträgt.

Die mikroskopische Betrachtung der gemahlenen bzw. mahlgetrockneten Celluloseetherpartikel zeigt kugelartige Gestalt neben länglichen Fasern oder Partikel mit kurzen, häkchenartigen Auswüchsen.

Mit Hilfe des erfindungsgemäßen Verfahrens ist es möglich, die Korngrößenverteilung gezielt einzustellen. Die bevorzugten Korngrößenverteilungen betragen zwischen 200 und 30 $\mu$m, besonders bevorzugt zwischen 180 und 63 $\mu$m und werden durch die lichte Maschenweite des Siebgewebes eingestellt.

Die Schüttgewichte der mit dem erfindungsgemäßen Verfahren abgesiebten Celluloseether betragen zwischen 200 und 600 g/l, bevorzugt zwischen 250 und 450 g/l.

Die Rieselfähigkeit der mit dem erfindungsgemäßen Verfahren abgesiebten Celluloseether beträgt zwischen 50 und 200 cm$^3$/s, bevorzugt zwischen 60 und 140 cm$^3$/s (bestimmt nach DIN 53492).

Die vorstehend beschriebenen Celluloseether werden zunächst gemäß Verfahrensschritt a) auf die dafür vorgesehene Siebfläche aufgebracht. Im allgemeinen werden hierzu die dem Fachmann bekannten Aufgabevorrichtungen, wie Verteilschnecke oder Einlauftrichter, eingesetzt. Während dieser Aufgabe befindet sich die Siebfläche im Ruhezustand oder, bevorzugt in dem nachfolgend bei Verfahrensschritt b) beschriebenen Schwingungs- und/oder Taumelzustand.

Die auf die Siebfläche pro Zeiteinheit aufgegebene Menge (Siebflächenbelastung) an Celluloseether ist abhängig von der Produktstruktur und von der gewählten lichten Maschenweite des Siebes. Bevorzugt werden Siebgewebe mit einer lichten Maschenweite von 250 bis 63 $\mu$m eingesetzt.

Mit Hilfe des erfindungsgemäßen Verfahrens ist es möglich, die spezifische Siebflächenbelastung bei gleichbleibendem Siebgütegrad, gegenüber den bisher bekannten Siebverfahren, zu erhöhen.

Zur Erzielung von spezifikationsgerechten Celluloseethern in allen Korngrößen-Bereichen wird das eingesetzte Siebgewebe hinsichtlich der lichten Maschenweite so ausgewählt, daß einerseits in der Durchlaufmenge (Siebdurchgang) ein Minimum an nichtgewünschten Grobkorn erreicht wird, eine solche Durchlaufmenge wird nachfolgend als Gutkorn bezeichnet, und andererseits in der Überlaufmenge nur noch ein Minimum an Feinkorn enthalten ist. Eine solche Überlaufmenge wird nachfolgend als Überkorn bezeichnet.

Im Anschluß an das Auftragen des vorstehend beschriebenen Celluloseethers (Siebgut) erfolgt die Auftrennung des Siebgutes in Durchlaufmenge, die überwiegend aus Feinkorn und geringen Mengen Grobkorn besteht, und in die Überlaufmenge, die überwiegend aus Grobkorn und geringen Mengen an Feinkorn besteht, mittels einer schwingenden und/oder taumelnden Siebfläche (Verfahrensschritt b).

Als Grobkorn werden die Celluloseether-Partikel bezeichnet, deren Korngröße größer als die Sieböffnung eines bestimmten Prüfsiebes ist. Als Feinkorn werden die Celluloseether-Partikel bezeichnet, deren Korngröße kleiner als die Sieböffnung eines bestimmten Prüfsiebes ist.

Das Gutkorn enthält einen Grobkornanteil der üblicherweise unterhalb 6 Gew.-% liegt. Der Feinkornanteil im Überkorn ist Abhängig von der Siebflächenbelastung, Trenngrenze sowie vom Siebgütegrad und vom Siebmaschinen-Typ und der Kornstruktur der Celluloseether-Partikel.

Zur Auftrennung des Siebgutes mittels einer schwingenden Siebfläche ist es erforderlich, die Siebfläche in Schwingung zu versetzen. Um den gewünschten Siebeffekt zu erreichen, sind die Schwingungsfrequenz, die Schwingungsamplitude sowie der Neigungswinkel der Siebfläche zur Horizontalen einzustellen. Die Einstellung der Schwingungsfrequenz und der Schwingungsamplitude der Siebfläche erfolgt in der Regel mittels elektromagnetischer Schwingköpfe in einem Frequenzbereich von 5 bis 100 Hz, vorzugsweise 30 bis 60 Hz (Hertz). Die Einstellung der Schwingungsamplitude erfolgt in einem Bereich von 0,3 bis 4 mm, vorzugsweise 0,3 bis 1,2 mm.

Darüber hinaus wird der Neigungswinkel der schwingenden Siebfläche zur Horizontalen in einem Bereich von 30° bis 60° eingestellt, so daß durch die vorstehend beschriebenen Verfahrensparameter eine zur Auftrennung des Siebgutes erforderliche Verweilzeit auf der Siebfläche eingestellt werden kann.

Zur Auftrennung des Siebgutes mittels einer taumelnden Siebfläche ist es erforderlich die Siebfläche in eine Taumelbewegung zu versetzen. Um die gewünschte Taumelbewegung (Kreisbewegung) zu erreichen, sind neben der Drehzahl der Siebfläche auch die Tangential- und Radial-Neigungswinkel der Siebfläche einzustellen.

Die Drehzahl der Siebfläche beträgt 180 bis 240 Umdrehungen pro Minute, der tangentiale Neigungswinkel beträgt 1 bis 5° und der radiale Neigungswinkel beträgt 5 bis 10°.

Die schwingende und/oder taumelnde Siebfläche wird von unten her senkrecht zur Siebfläche mit einem Luftstrahl so durchspült, daß ein Zugehen der Siebfläche wirkungsvoll verhindert werden kann. Der Luftdurchsatz beträgt dazu vorzugsweise 3 bis 8 $m^3/m^2$min, insbesondere 4 bis 7 $m^3/m^2$min. Als Austritts-öffnungen sind insbesondere unterhalb der Siebfläche angebrachte Schlitzdüsen geeignet, die vorzugsweise mit 1 bis 10, insbesondere 2 bis 8, Umdrehungen pro Minute rotieren.

Bedingt durch die vorstehend genannten Maßnahmen wird ein Zugehen des Siebgewebes durch Grenzkorn (Steckkorn) oder Mattenbildung verhindert, wodurch eine gleichbleibend hohe spezifische Durchsatzleistung ( = spezifische Siebflächenbelastung) ermöglicht wird.

Die eingesetzten Siebflächen haben üblicherweise eine Siebbreite von 0,95 bis 1,75 m, die Sieblängen betragen üblicherweise 1,45 bis 5,4 m, wodurch sich durch Kombination der Siebbreiten und -längen Siebflächen von 1,38 bis 18,9 $m^2$ ergeben.

Im Verfahrensschritt c) wird die anfallende Durchlaufmenge (Gutkorn) ausgetragen. Für das Austragen des Gutkorns gibt es zwei Möglichkeiten. Entweder wird das Gutkorn aus der Siebvorrichtung entfernt und in dieser Form einer weiteren Verarbeitung (im allgemeinen Verpackung) zugeführt oder das Gutkorn wird auf eine weitere Siebfläche mit einer geringeren lichten Maschenweite aufgebracht (Verfahrensschritt a) und dieses Siebgut erneut in Gutkorn und Überkorn aufgetrennt.

Im Verfahrensschritt d) wird die anfallende Umlaufmenge ausgetragen. Das Austragen der Umlaufmenge besteht darin, daß sie als Siebflächenüberlauf aus der Siebvorrichtung entfernt wird. Dieser Siebflächenüberlauf wird einer Mahlung unterworfen und als Siebgut anschließend gemäß Verfahrensschritt a) erneut auf die Siebfläche aufgebracht und gemäß Verfahrensschritt b) erneut in Durchlaufmenge und Überlaufmenge aufgetrennt.

In einer bevorzugten Ausführungsform des erfindungsgemäßen Verfahrens werden mehr als zwei, bevorzugt vier schwingende und/oder taumelnde Siebflächen analog der bekannten Zweidecker-Siebmaschine nacheinander geschaltet, wobei die nachfolgende Siebfläche eine geringere lichte Maschenweite als die vorhergehende Siebfläche aufweist.

Das vorstehend beschriebene Verfahren eignet sich insbesondere als kontinuierliches Verfahren zum Absieben von feinpulverigen Celluloseethern, die eine Partikelgröße < 250 $\mu$m, vorzugsweise 1 bis 250 $\mu$m aufweisen, aus Celluloseethern die eine feinfaserige, beziehungsweise wattige, beziehungsweise wollige Struktur aufweisen.

Das erfindungsgemäße Verfahren kann mit Hilfe von bekannten Siebvorrichtungen durchgeführt werden.

Beispielhaft für solche mit schwingenden Siebflächen arbeitenden Siebvorrichtungen sind Hochleistungs-Schallsiebmaschinen zu nennen. Hierbei erfolgt der Antrieb der Hochleistungs-Schallsiebmaschinen mit elektromagnetischen Schwingköpfen, welche außen am Siebgehäuse sitzen und frei zugänglich sind. Die Erregung (Schwingung) des Siebgewebes erfolgt über unter dem Siebgewebe sitzenden Wellen, die quer zur Förderrichtung verlaufen und Schlagleisten tragen. Auf den Schlagleisten befindet sich eine Kunststoffummantelung, um das Siebgewebe zu schonen. Über Stößel, Stößelköpfe, Winkelhebel und die Schlagleisten werden die Schwingungen dem Siebgewebe aufgezwungen. Siebgewebe und Schlagleisten sind nur kraftschlüssig miteinander verbunden. Um Querschwingungen zu vermeiden, sind die Wellen ausgewuchtet und links und rechts, außerhalb des Aggregates gelagert.

Das Gewebe ist über Spannfalze im Siebaggregat gespannt, wobei an der Produkteinlaufseite Spannleisten angeordnet sind, die ein selbsttätiges Nachspannen und schnelles Auswechseln ermöglichen.

Die komplette Siebmaschine besteht üblicherweise aus dem Siebaggregat mit Abdeckung, dem Untertrichter, gegebenenfalls einen Schwenktrichter und einer elektrischen Steuerung. Das Siebaggregat besteht in der Regel aus einem Siebgewebe mit Spannfalzen und Spannleisten, Antriebelementen und Einlauftrichter.

Beispielhaft für solche mit taumelnden Siebflächen arbeitenden Siebvorrichtungen sind Taumelsiebmaschinen zu nennen.

Hierbei wird der üblicherweise runde Siebkasten durch einen starren Kurbelantrieb in eine Taumelbewegung versetzt. Das geschieht durch einen in seinen Neigungen veränderbaren Kurbelzapfen. Die horizontale Kreisbewegung wird hierbei von einer Vertikalbewegung überlagert, so daß eine Taumelbewegung resultiert, die von den Parametern Drehzahl, Exzentrizität der Kurbel, Radial- und Tangential-Neigung abhängt. Die Konstruktion der Taumelsiebmaschinen erlaubt es, alle Parameter stufenlos zu verändern, so daß ein optimaler Aussieb- und Siebgüte-Grad möglich ist.

Die Schwingungsweite und damit die Beschleunigung variiert durch Verstellen des Kurbel-Exzenters, die Kurbelzapfenneigung in tangentialer Richtung steuert die Transportgeschwindigkeit kreisförmig auf der Siebfläche, die Neigung der Kurbel in radialer Richtung bestimmt die Förderbewegung vom Zentrum der Siebfläche zum Rand. Aus dem Zusammenwirken von Tangential- und Radialneigung entsteht eine spiralförmige Bewegung des Siebgutes auf der Siebfläche.

Alle Taumelsiebmaschinen können als Ein-, Zwei-, Drei- oder Vierdecker ausgerüstet werden, so daß, in Abhängigkeit von der gewählten lichten Maschenweite des Siebgewebes, bis zu 5 Fraktionen abgesiebt werden können.

Zur Beurteilung, ob das Siebsystem zum Sieben von Celluloseethern geeignet ist, werden der Aussiebgrad

$$\text{Aussiebgrad} = \frac{\text{Feinkornanteil in der Siebdurchgangsmenge}}{\text{Feinkornanteil in der Aufgabemenge}} \times 100 \ [\%]$$

und der Siebgütegrad

$$\text{Siebgütegrad} = \frac{(a\text{-}g) \times (f\text{-}a) \times 100}{(100\text{-}a) \times (f\text{-}g) \times a} \times 100 \ [\%]$$

worin g den Feinkornanteil des Siebrückstandes in (%), f den Feinkornanteil des Siebdurchganges in (%) und a den Feinkornanteil des aufgegebenen Celluloseethers in (%) bedeutet, herangezogen.

Als Trenngrenze wird hier die angestrebte Obergrenze der Partikelgröße im Gutkorn verstanden, sie wird mit Hilfe eines Alpine-Luftstrahlsiebes ermittelt. Die Einwaage beträgt 10 g, die Siebdauer 3 Minuten.

Die Rieselfähigkeit wurde gemäß DIN 53492 und das Schüttgewicht wurde gemäß DIN 53466 ermittelt.

## Beispiele

In den nachfolgend beschriebenen Beispielen 1 und 2 erfolgte die Auftrennung des Siebgutes in Gutkorn und Überkorn mit Hilfe eines taumelnden Siebes.

## Beispiel 1

Eine nach bekannten Verfahren hergestellte Methylhydroxyethylcellulose (MHEC) mit einem Veretherungsgrad von DS = 1,56 ($OCH_3$), einem MS = 0,29 ($OC_2H_4$) und einer Viskosität von > 300 000 mPas als 1,9 %ige wäßrige Lösung wurde gereinigt, getrocknet und gemahlen. Das Schüttgewicht des Mahlgutes wurde mit 310 g/l festgestellt. Das Siebgut hatte keine Rieselfähigkeit gemäß DIN 53492. Es wurde folgende Siebanalyse ermittelt:

| Partikeldurchmesser mm | Gew.-% |
|---|---|
| < 0,300 | 99,4 |
| < 0,200 | 95,5 |
| < 0,180 | 93,1 |
| < 0,125 | 83,0 |
| < 0,100 | 75,0 |
| < 0,071 | 64,9 |
| < 0,063 | 45,6 |
| < 0,032 | 7,9 |

Mit diesem Mahlgut wurden die Absiebungen nach dem erfindungsgemäßen Verfahren und für die Vergleichsbeispiele durchgeführt.

a) Trenngrenze bei 0,180 mm

Die Siebmaschine hatte nach dem erfindungsgemäßen Verfahren folgende Einstellungen:
Vier rotierenden Schlitzdüsen, mit einem Luftdurchsatz von 6,53 $m^3/m^2$min und einer Drehzahl von 4 U/min. Die Kreisbewegung der Siebfläche betrug 210 U/min. Die tangentiale Schrägneigung der Siebfläche betrug

EP 0 676 416 A2

2° und die radiale Schrägneigung betrug 6°.

Das Siebgewebe hatte eine lichte Maschenweite von 0,250 mm. Die spezifische Siebflächenbelastung betrug 207,8 kg/m²h.

Die Siebung zeigt folgende Siebanalyse:

| Partikelgröße | Siebdurchgang | Siebrückstand | SG | Rieselfähigkeit |
|---|---|---|---|---|
| >0,18 mm<br><0,18 mm | 1,14 Gew.-%<br>98,86 Gew.-% | 95,1 Gew.-%<br>4,9 Gew.-% | 334 | $VR_{25}$ = 90-130 |

Der bei der Siebung erzielte Aussiebgrad betrug 99,9 % der Siebgütegrad 84,17 %.

**Vergleichsbeispiele:**

| Sieb (Typ) | spez. Flächenbelastung kg/m²h | Aussiebgrad % | Siebgütegrad % | SG |
|---|---|---|---|---|
| Passiersieb<br>Plansichter | 62<br>39,04 | 77,1<br>98,8 | 76,75<br>66,71 | 334<br>250 |

b) Trenngrenze bei 0,125 mm

Das Siebgewebe hatte eine lichte Maschenweite von 0,150 mm. Die spezifische Siebflächenbelastung betrug 244,4 kg/m²h.

Die Siebung zeigt folgende Siebanalyse:

| Partikelgröße | Siebdurchgang | Siebrückstand | SG | Rieselfähigkeit |
|---|---|---|---|---|
| >0,125 mm<br><0,125 mm | 3,55 Gew.-%<br>96,45 Gew.-% | 75,8 Gew.-%<br>24,2 Gew.-% | 366 | $VR_{25}$ = 60-100 |

Der bei der Siebung erzielte Aussiebgrad betrug 94,57 %, der Siebgütegrad 77,5 %.

Vergleichsbeispiele:

| Sieb (Typ) | spez. Flächenbelastung kg/m²h | Aussiebgrad % | Siebgütegrad % | SG |
|---|---|---|---|---|
| Passiersieb<br>Taumelsieb* | 82,55<br>70,00 | 70,03<br>74,50 | 70,03<br>66,22 | 346<br>334 |

[* ohne Luftstrahlreinigung]

c) Trenngrenze bei 0,100 mm

Das Siebgewebe hatte eine lichte Maschenweite von 0,120 mm. Die spezifische Siebflächenbelastung betrug 244,4 kg/m²h.

Die Siebung zeigt folgende Siebanalyse:

| Partikelgröße | Siebdurchgang | Siebrückstand | SG | Rieselfähigkeit |
|---|---|---|---|---|
| >0,10 mm<br><0,10 mm | 4,7 Gew.-%<br>95,4 Gew.-% | 69,94 Gew.-%<br>30,06 Gew.-% | 382 | $VR_{25}$ = 131 |

6

Der bei der Siebung erzielte Aussiebgrad betrug 87,47 %, der Siebgütegrad 74,83 %.

**Vergleichsbeispiele:**

| Sieb (Typ) | spez. Flächenbelastung kg/m²h | Aussiebgrad % | Siebgütegrad % | SG |
|---|---|---|---|---|
| Passiersieb | 82,55 | 70,03 | 70,03 | 346 |

**Beispiel 2**

Eine nach bekannten Verfahren hergestellte Methylhydroxypropylcellulose (MHPC) mit einem Veretherungsgrad von DS = 1,32 ($OCH_3$), einem MS = 0,25 ($OC_3H_6$) und einer Viskosität von 90 000 mPas als 1,9 %ige wäßrige Lösung wurde gereinigt, getrocknet und gemahlen. Das Schüttgewicht des Mahlgutes wurde mit 345 g/l festgestellt. Das Siebgut hatte eine Rieselfähigkeit von $VR_{25}$ = 108 $cm^3/s$.

Es wurde folgende Siebanalyse ermittelt:

| Partikeldurchmesser mm | Gew.-% |
|---|---|
| < 0,300 | 99,6 |
| < 0,200 | 97,1 |
| < 0,180 | 95,4 |
| < 0,125 | 87,5 |
| < 0,100 | 79,8 |
| < 0,071 | 67,3 |
| < 0,063 | 42,8 |
| < 0,032 | 8,0 |

Mit diesem Mahlgut wurden die Absiebungen nach dem erfindungsgemäßen Verfahren und für die Vergleichsbeispiele durchgeführt.

a) Trenngrenze bei 0,180 mm

Die Siebmaschine hatte nach dem erfindungsgemäßen Verfahren folgende Einstellungen:
Vier rotierenden Schlitzdüsen, mit einem Luftdurchsatz von 6,53 $m^3/m^2$min und einer Drehzahl von 4 U/min. Die Kreisbewegung der Siebfläche betrug 210 U/min. Die tangentiale Schrägneigung der Siebfläche betrug 2° und die radiale Schrägneigung betrug 6°.
Das Siebgewebe hatte eine lichte Maschenweite von 0,250 mm. Die spezifische Siebflächenbelastung betrug 244,4 $kg/m^2$h.
Die Siebung zeigt folgende Siebanalyse:

| Partikelgröße | Siebdurchgang | Siebrückstand | SG | Rieselfähigkeit |
|---|---|---|---|---|
| >0,180 mm | 1,72 Gew.-% | 97,7 Gew.-% | | |
| <0,180 mm | 98,28 Gew.-% | 2,3 Gew.-% | 450 | $VR_{25}$ = 100-140 |

Der bei der Siebung erzielte Aussiebgrad betrug 99,9 % der Siebgütegrad 63,6 %.

**Vergleichsbeispiele:**

| Sieb (Typ) | spez. Flächenbelastung kg/m²h | Aussiebgrad % | Siebgütegrad % | SG |
|---|---|---|---|---|
| Passiersieb | 55,18 | 59,51 | 58,58 | 345 |

b) Trenngrenze bei 0,125 mm

Das Siebgewebe hatte eine lichte Maschenweite von 0,150 mm. Die spezifische Siebflächenbelastung betrug 244,4 kg/m²h.

Die Siebung zeigt folgende Siebanalyse:

| Partikelgröße | Siebdurchgang | Siebrückstand | SG | Rieselfähigkeit |
|---|---|---|---|---|
| >0,125 mm <0,125 mm | 1,76 Gew.-% 98,24 Gew.-% | 53,22 Gew.-% 46,78 Gew.-% | 450 | $VR_{25}$ = 60-100 |

Der bei der Siebung erzielte Aussiebgrad betrug 88,9 %, der Siebgütegrad 77,7 %.

**Vergleichsbeispiele:**

| Sieb (Typ) | spez. Flächenbelastung kg/m²h | Aussiebgrad % | Siebgütegrad % | SG |
|---|---|---|---|---|
| Passiersieb Taumelsieb* | 79,27 227,22 | 49,9 80,08 | 49,9 61,97 | 402 370 |

[*ohne Luftstrahlreinigung]

c) Trenngrenze bei 0,100 mm

Das Siebgewebe hatte eine lichte Maschenweite von 0,120 mm. Die spezifische Siebflächenbelastung betrug 244,4 kg/m²h.

Die Siebung zeigt folgende Siebanalyse:

| Partikelgröße | Siebdurchgang | Siebrückstand | SG | Rieselfähigkeit |
|---|---|---|---|---|
| >0,100 mm <0,100 mm | 3,2 Gew.-% 96,8 Gew.-% | 72,13 Gew.-% 27,87 Gew.-% | 450 | $VR_{25}$ = 60-80 |

Der bei der Siebung erzielte Aussiebgrad betrug 91,38 %, der Siebgütegrad 79,5 %.

**Vergleichsbeispiele:**

| Sieb (Typ) | spez. Flächenbelastung kg/m²h | Aussiebgrad % | Siebgütegrad % | SG |
|---|---|---|---|---|
| Plansichter | 57,50 | 76,3 | 74,66 | 335 |

**Patentansprüche**

1. Verfahren zum Absieben von Celluloseethern, die eine feinfaserige, beziehungsweise wattige, beziehungsweise wollige Struktur aufweisen, umfassend die Maßnahmen:
   a) Aufbringen des Celluloseethers (Siebgut) auf eine Siebfläche,
   b) Auftrennen des Siebgutes in Durchlaufmenge (Gutkorn oder Siebdurchgang) und Umlaufmenge (Überkorn oder Siebflächenüberlauf) mit Hilfe einer schwingenden und/oder taumelnden Siebfläche,
   c) Austragen der Durchlaufmenge und
   d) Austragen der Umlaufmenge aus dem Siebsystem,
   dadurch gekennzeichnet, daß die schwingende und/oder taumelnde Siebfläche von unten her mit einem Luftstrahl senkrecht zur Siebfläche durchspült wird.

8

2. Verfahren gemäß Anspruch 1, dadurch gekennzeichnet, daß die abzusiebenden Celluloseether ein Schüttgewicht von 200 bis 600 g/l haben.

3. Verfahren gemäß Anspruch 1, dadurch gekennzeichnet, daß die abzusiebenden Celluloseether eine Viskosität von 30000 bis 300000 mPas (gemessen als 1,9 gew.-%ige wäßrige Lösung) aufweisen.

4. Verfahren gemäß Anspruch 1, dadurch gekennzeichnet, daß die abzusiebenden Celluloseether einen molekularen Substitutionsgrad (MS-Wert) zwischen 0,05 und 0,8 und einen durchschnittlichen Substitutionsgrad (DS-Wert) zwischen 1,3 und 2,1 aufweisen.

5. Verfahren gemäß Anspruch 1, dadurch gekennzeichnet, daß der Neigungswinkel der schwingenden Siebfläche zur Horizontalen 30° bis 50° beträgt.

6. Verfahren gemäß Anspruch 1, dadurch gekennzeichnet, daß die schwingende Siebfläche mit einer Frequenz von 5 bis 100 Hertz und einer Amplitude von 0,3 bis 4 mm schwingt.

7. Verfahren gemäß Anspruch 1, dadurch gekennzeichnet, daß die taumelnde Siebfläche eine Drehzahl von 180 bis 240 Umdrehungen pro Minute aufweist.

8. Verfahren gemäß Anspruch 1, dadurch gekennzeichnet, daß die taumelnde Siebfläche einen Tangentialneigungswinkel von 1 bis 5° und einen Radialneigungswinkel von 5 bis 10° aufweist.

9. Verfahren gemäß Anspruch 1, dadurch gekennzeichnet, daß der Luftdurchsatz des Luftstrahls durch die Siebfläche 3 bis 8 $m^3/m^2$ min beträgt.

10. Verfahren gemäß Anspruch 1, dadurch gekennzeichnet, daß der Luftstrahl aus Schlitzdüsen austritt, die mit einer Drehzahl von 1 bis 10 Umdrehungen pro Minute rotieren.

11. Verfahren gemäß Anspruch 1, dadurch gekennzeichnet, daß die im Verfahrensschritt c) ausgetragene Umlaufmenge, gegebenenfalls nach einer Mahlung erneut auf die Siebfläche gemäß Verfahrensschritt a) aufgebracht wird.

12. Verfahren gemäß Anspruch 1, dadurch gekennzeichnet, daß die im Verfahrensschritt c) ausgetragene Umlaufmenge auf eine weitere Siebfläche mit einer geringeren lichten Maschenweite aufgebracht und gemäß Verfahrensschritt b) in Durchlaufmenge und Überlaufmenge aufgetrennt wird.